# FASCICULE DE BREVET EUROPEEN

(11) **EP 1 109 991 B1**
(45) Date de publication et mention de la délivrance du brevet: **29.05.2002**
(21) Numéro de dépôt: 98937592.8
(22) Date de dépôt: 09.07.1998
(51) Int. Cl.: F01B 17/02, F02B 27/00

(54) **PROCEDE DE FONCTIONNEMENT DE CHAMBRE D'EXPANSION DE MOTEUR DEPOLLUANT ET CHAMBRE D'EXPANSION POUR SA MISE EN OEUVRE**
VERFAHREN ZUM BETRIEB EINER EXPANSIONSKAMER EINER BRENNKRAFTMASCHINE SOWIE EXPANSIONSKAMMER
METHOD FOR OPERATING POLLUTION-FREE ENGINE EXPANSION CHAMBER AND EXPANSION CHAMBER THEREFOR

(43) Date de publication de la demande: 27.06.2001
(73) Titulaire: Société MDI Motor Development International S.A., Luxembourg (LU)
(72) Inventeur: Negre, Guy, San Remo (IT); NEGRE, Cyril, 06516 Carros Cédex (FR)
(86) Numéro de dépôt international: FR9801483
(87) Numéro de publication internationale: WO0003123

(56) Documents cités:
- WO-A-96/27737
- FR-A- 2 441 057

## Description

L'invention concerne le fonctionnement d'une chambre d'expansion de moteur dépollué ou dépolluant à injection d'air comprimé additionnel.

L'auteur a décrit dans sa demande de brevet publié WO 96/27737 un procédé de dépollution de moteur à chambre de combustion externe indépendante, fonctionnant suivant un principe bi-mode à deux types d'énergie, utilisant soit un carburant conventionnel de type essence ou gasoil sur route (fonctionnement dit mono-mode à air-carburant), soit, à basse vitesse, notamment en zone urbaine et suburbaine, une addition d'air comprimé (ou tout autre gaz non polluant) à l'exclusion de tout autre carburant, (fonctionnement dit mono-mode air-air c'est-à-dire avec addition d'air comprimé). Dans sa demande de brevet WO 97/48884, l'auteur a décrit l'installation de ce type de moteur en fonctionnement mono-mode, sur les véhicules de service, par exemple des autobus urbains, des taxis ou camionnettes de livraison.

En mode air-carburant, le mélange air carburant est aspiré et comprimé dans une chambre d'aspiration et de compression indépendante. Puis ce mélange est transféré, toujours en pression, dans une chambre de combustion indépendante et à volume constant pour y être enflammé afin d'augmenter la température et la pression dudit mélange. Après l'ouverture d'un transfert reliant ladite chambre de combustion ou d'expansion à une chambre de détente et d'échappement, ce mélange sera détendu dans cette dernière pour y produire un travail. Les gaz détendus sont ensuite évacués à l'atmosphère à travers un conduit d'échappement.

En fonctionnement en mode air-air, à faible puissance, l'injecteur de carburant n'est plus commandé ; dans ce cas, l'on introduit dans la chambre de combustion, sensiblement après l'admission dans cette demière de l'air comprimé -sans carburant- provenant de la chambre d'aspiration et de compression, une petite quantité d'air comprimé additionnel provenant d'un réservoir externe où l'air (ou tout autre gaz) est stocké sous haute pression, par exemple 200 bars, et à la température ambiante. Lors de l'injection d'air comprimé additionnel, cette petite quantité d'air comprimé à température ambiante va s'échauffer au contact de la masse d'air à haute température contenue dans la chambre de combustion ou d'expansion, va se dilater et augmenter la pression régnant dans la chambre pour permettre de délivrer lors de la détente un travail moteur.

Ce type de moteur bi-mode ou bi-énergie (air et essence et air-air comprimé additionnel) peut également être modifié pour une utilisation préférentielle, en ville par exemple, sur tous véhicules et plus particulièrement sur des autobus urbains ou autres véhicules de service (taxis, bennes à ordures, etc.), en mono-mode air-air comprimé, par suppression de tous les éléments de fonctionnement du moteur en liaison avec le carburant traditionnel.

Le moteur fonctionne alors seulement en mono-mode avec l'injection d'air comprimé additionnel dans la chambre de combustion qui devient ainsi une chambre d'expansion. En outre, l'air aspiré par le moteur peut être filtré et purifié à travers un ou plusieurs filtres à charbon ou autre procédé mécanique, chimique, tamis moléculaire, ou autres filtres afin de réaliser un moteur dépolluant. L'emploi du terme « air » dans le présent texte s'entend « tout gaz non polluant ».

Dans ce type de moteur, l'air comprimé additionnel est injecté dans la chambre de combustion ou d'expansion sous une pression d'utilisation déterminée en fonction de la pression régnant dans la chambre et sensiblement plus élevée que cette dernière. Cela nécessite des pressions d'injection relativement élevées par exemple 30 bar.

Les problèmes de la dynamique des gaz dans les écoulements de fluide ont fait l'objet de nombreuses études et essais. Dans les écoulements supersoniques les ondes de pression émises par les corps en mouvement forment des enveloppes de formes au passage desquels l'air subit des variations dites très rapides de vitesse et des propriétés physiques se traduisant notamment par l'apparition d'ondes de chocs. Les essais et expériences réalisés avec un tube à choc ont pour objectif de procéder à de nombreuses expériences dans le domaine de la dynamique des gaz et de la détermination de leurs propriétés ainsi que dans le domaine des souffleries supersoniques (soufflerie à choc). Le tube à choc est constitué de deux morceaux de tube où est serrée entre deux extrémités une membrane et où les extrémités libres sont fermées. On appelle l'un des morceaux : tube moteur, l'autre : tube de travail, et l'ensemble : tube à choc. En remplissant le tube de travail avec le gaz dont on veut faire des essais et en comprimant du gaz dans le tube moteur jusqu'à éclatement de la membrane, un processus d'égalisation de pression s'établit alors. Le gaz moteur à haute pression se détend par une onde de détente et s'écoule dans le tube de travail. Il crée alors une onde de choc dans le gaz à basse pression.

Le procédé de fonctionnement de la chambre d'expansion selon l'invention se propose d'utiliser les techniques des chocs et ondes de choc dans les écoulements gazeux subsoniques et plus particulièrement supersoniques pour avoir le meilleur rendement possible du moteur en obtenant des pressions et des températures de gaz élevées dans la chambre d'expansion avant le transfert dudit gaz dans la chambre de détente et d'échappement. Il consiste à diviser le processus d'augmentation de pression dans la chambre en deux étapes, en introduisant un gaz moteur à haute pression provenant de la chambre d'aspiration et de compression dans une partie de ladite chambre et, d'autre part, en introduisant l'air comprimé additionnel dans l'autre partie à une pression nettement inférieure, puis à mettre brutalement en contact les deux parties pour obtenir du fait de la différence des pressions, la détente brutale du gaz moteur qui se détend par une onde de détente, et s'écoule dans le gaz de travail qui est à pression inférieure en créant une onde de choc de compression qui permet d'augmenter sensiblement la pression totale de la chambre peu avant sa détente dans la chambre de détente et d'échappement pour produire un travail moteur.

Préférentiellement, le procédé de fonctionnement de la chambre d'expansion suivant l'invention comporte une ionisation du gaz moteur avant son introduction dans la chambre de travail ce qui a pour effet de créer des ondes de caractères électromagnétiques et d'augmenter l'intensité de l'onde de choc dans la chambre de travail et de retarder les phénomènes de relaxation.

La chambre d'expansion, pour la mise en oeuvre du procédé, est divisée en deux parties séparées par un obturateur très rapide qui pourra les mettre brutalement en communication au moment choisi dans le cycle ; l'une de ces parties, dite chambre moteur est reliée à la chambre d'aspiration et de compression et reçoit le gaz moteur provenant de cette dernière ; la deuxième chambre est reliée à la chambre de détente et d'échappement et reçoit l'air comprimé additionnel, elle devient ainsi la chambre de travail. On peut comprendre dès lors le fonctionnement de la chambre d'expansion suivant l'invention ; dans un premier temps la chambre moteur est remplie avec de l'air comprimé chaud et à pression élevée par exemple 50 bar provenant de la chambre d'aspiration et de compression, alors que l'on injecte une quantité d'air comprimé additionnel provenant d'un réservoir de stockage sous haute pression de manière à obtenir dans la chambre de travail une pression plus basse par exemple 10 bar, puis, peu avant la mise en communication avec le cylindre de détente du moteur, on ouvre brutalement l'obturateur inter-chambre; dès lors, et du fait de la différence des pressions, le gaz moteur va se détendre par une onde de détente et s'écouler dans la chambre de travail où il crée une onde de choc de compression et augmente considérablement la pression dans ladite chambre de travail peu avant sa mise en communication avec le cylindre de détente et d'échappement. Cette augmentation de pression est utilisée pour produire le travail moteur en détendant les gaz dans la chambre de détente et d'échappement.

Selon une autre caractéristique de l'invention, les formes des deux chambres sont réalisées en forme de tuyère où la chambre moteur débouche par un convergent dans un col fermé par un obturateur rapide qui permet son ouverture brutale, au moment choisi dans le cycle, sur la chambre de travail par un divergent, de telle sorte que le jet supersonique créé à l'ouverture du col provoque la formation de vortex, qui outre les effets de l'onde de choc, permettent de produire les effets d'augmentation de pression recherchés.

Il est possible de calculer et de choisir les volumes de la chambre moteur et de la chambre de travail, optimiser les formes et dimensions, créer un ou plusieurs chocs déclenchant des ondes et/ou des vortex sans changer le procédé de l'invention.

Il est également possible de choisir dans le cycle l'instant de l'ouverture de l'obturateur inter-chambres et du transfert dans la chambre de détente pour obtenir le résultat recherché à savoir la plus grande pression possible dans la chambre d'expansion au moment de la détente.

D'autres buts, avantages et caractéristiques de l'invention apparaîtront à la lecture de la description à titre non limitatif de plusieurs modes de réalisation faite en regard des dessins annexés où :
La figure 1 représente une vue en coupe transversale d'un ensemble moteur équipé de la chambre d'expansion suivant l'invention;
La figure 2 représente ce même moteur peu avant la détente ;
La figure 3 représente en coupe transversale, une chambre d'expansion en forme de tuyère ;
La figure 4 représente cette même chambre avec son obturateur ouvert ;
La figure 5 représente une chambre d'expansion selon l'invention dont la chambre moteur est équipée d'une cathode.

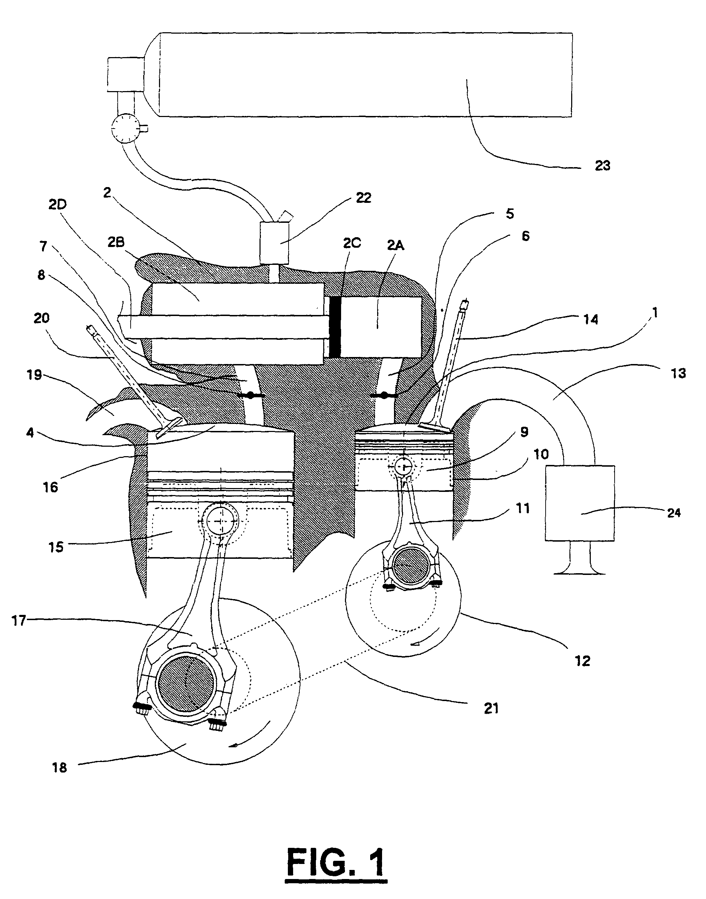

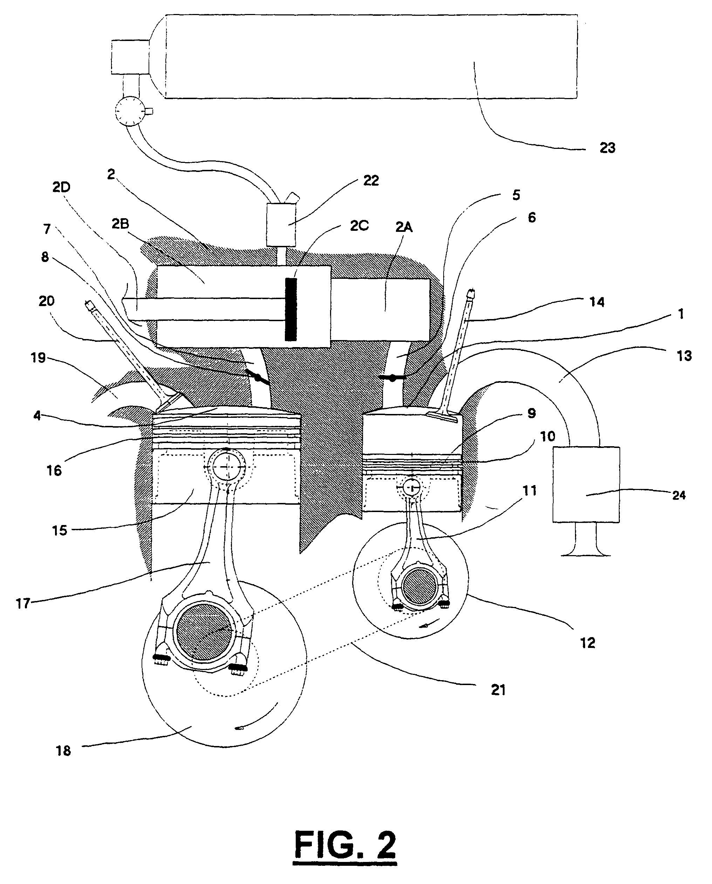

La figure 1, où les échelles des différents éléments ne sont pas respectées pour des raisons de meilleure compréhension du dessin représente schématiquement, vu en coupe transversale, un mode de réalisation d'un ensemble moteur équipé de la chambre d'expansion suivant l'invention. La chambre d'aspiration et de compression et la chambre de détente et d'échappement sont commandées chacune par un système bielle manivelle et pistons coulissant dans les cylindres, et on peut voir la chambre d'aspiration et la chambre de compression 1, la chambre d'expansion 2 divisée en deux parties, la chambre moteur 2A et la chambre dé travail 2B, séparées par un obturateur 2C et sa commande 2D. Un injecteur d'air additionnel 22 alimenté en air comprimé stocké dans un réservoir très haute pression 23, est implanté dans la chambre de travail 2B. La chambre d'aspiration et de compression 1 est reliée à la chambre moteur 2A de la chambre d'expansion 2 par un conduit 5 dont l'ouverture et la fermeture sont commandées par un volet étanche 6. La chambre de travail 2B de la chambre d'expansion 2 est reliée à la chambre de détente et d'échappement 4 par un conduit ou transfert 7 dont l'ouverture et la fermeture sont commandées par un volet étanche 8. La chambre d'aspiration et de compression 1 fonctionne comme un ensemble de compresseur à piston où le piston 9 coulissant dans un cylindre 10 est commandé par une bielle 11 et un vilebrequin 12. La chambre de détente et d'échappement 4 commande un ensemble classique de moteur à piston avec un piston 15 coulissant dans un cylindre 16, qui entraîne par l'intermédiaire d'une bielle 17 la rotation d'un vilebrequin 18; l'échappement de l'air détendu s'effectuant à travers un conduit d'échappement 19 dont l'ouverture est commandée par une soupape 20. La rotation du vilebrequin 12 de la chambre d'aspiration et de compression 1 est commandée à travers une mécanique 21, par le vilebrequin moteur 18 de la chambre de détente et d'échappement 4. Il va sans dire que les deux bielles peuvent également être attelées sur un même vilebrequin, mais la solution dessinée est plus démonstrative de l'indépendance des chambres. Le moteur est représenté au point mort haut compresseur, le volet étanche 6 vient de se fermer et la chambre moteur 2A de la chambre d'expansion 2 est remplie d'air comprimé par le piston 9 à haute pression, l'injecteur d'air additionnel 22 est ou vient d'être actionné pour obtenir dans la chambre de travail 2B de l'air comprimé à une pression inférieure à celle régnant dans la chambre moteur 2A, l'obturateur rapide 2C est alors actionné pour mettre brutalement en communication la chambre moteur 2A et la chambre de travail 2B (Figure 2). En raison de la différence de pression le gaz moteur va se détendre par une onde de détente et se propager dans la chambre de travail où il crée une onde de choc de compression provoquant une augmentation de pression considérable dans la chambre de travail 2B; avant que le phénomène de relaxation ne fasse retomber cette pression à celle que produirait le mélange des gaz contenus dans les deux chambres, et alors que le piston 15 de la chambre de détente arrive à son point mort haut, l'ouverture du canal 7 est commandée par le volet 8, pour permettre la détente des gaz contenus dans la chambre de travail jusqu'au point mort bas du piston de détente 15 entraînant le vilebrequin moteur 18 et produisant le travail moteur.

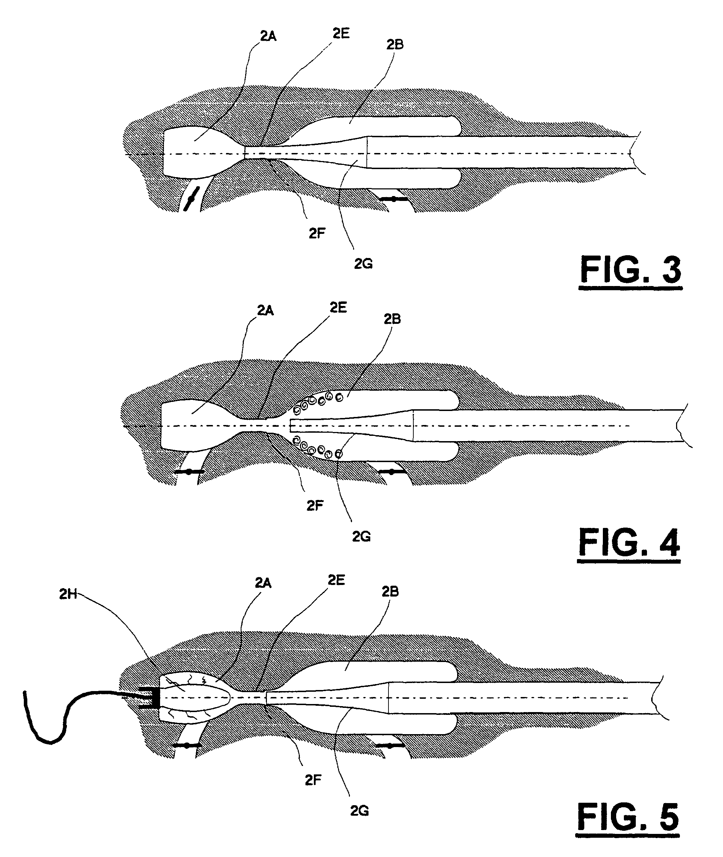

La figure 3 représente vu en coupe longitudinale un autre mode de réalisation de la chambre d'expansion selon l'invention, où le profil général de la chambre est réalisé en forme de tuyère permettant de générer lors du fonctionnement, la formation de vortex toroïdaux. La chambre moteur 2A est reliée à la chambre de travail 2B par un col 2E dans lequel un piston coulissant 2G assure la séparation entre elles. Dans le col d'entrée juste avant le divergeant est ménagée une augmentation de section plane 2F accompagnée d'un retour destiné lors de l'ouverture par le piston à créer l'onde de choc et à favoriser la création de vortex représentés symboliquement sur la figure 4. La chambre moteur 2A contenant le gaz moteur sous haute pression converge vers le col d'entrée 2E, dont le diamètre est choisi en fonction du nombre de Mach souhaité, débouchant sur les parois divergeantes de la chambre de travail 2B. Un piston-tige obturateur 2G vient séparer les deux chambres et former un noyau central qui va provoquer un écoulement annulaire. Lors du fonctionnement et au moment choisi dans le cycle moteur le piston obturateur 2F se retire et met brutalement en communication les deux chambres lorsque sa tête découvre l'augmentation de section plane 2F. Du fait de la différence des pressions, le gaz contenu dans la chambre moteur 2A se détend dans la chambre de travail 2B en créant une onde de choc de compression dans cette dernière. La présence du piston obturateur 2G provoque l'écartement de l'écoulement et favorise la naissance de vortex.

La figure 5 représente une chambre d'expansion selon l'invention similaire à celle décrite sur les figures 3 et 4 où l'on introduit dans la chambre moteur 2A une cathode 2H destinée à ioniser le gaz dans le but de créer des ondes de caractères électromagnétiques, d'augmenter l'intensité de l'onde de choc et de retarder les phénomènes de relaxation.

Bien entendu, l'invention n'est nullement limitée aux modes de réalisations décrits et représentés, plusieurs ensembles tels que décrits peuvent être groupés et réalisés à la manière des moteurs pluricylindres, les formes et dimensions peuvent varier et elle est susceptible de nombreuses variantes accessibles à l'homme de l'art, suivant les applications envisagées, sans que l'on ne s'écarte du cadre de l'invention tel que défini par les revendications.

## Revendications

1. Procédé de fonctionnement d'un moteur comportant une chambre d'expansion, une chambre d'aspiration et de compression (1) et une chambre de détente et d'échappement (4) indépendantes avec injection d'un gaz comprimé additionnel non-polluant dans la chambre d'expansion (2) dans laquelle se produit un processus d'augmentation de pression, **caractérisé en ce qu'**il consiste à diviser le processus d'augmentation de pression dans la chambre d'expansion en deux étapes, en introduisant d'une part un gaz moteur à haute pression provenant de la chambre d'aspiration et de compression dans une partie de la chambre d'expansion, et en introduisant d'autre part le gaz comprimé additionnel non-polluant, dit « de travail », dans l'autre partie de la chambre d'expansion à une pression nettement inférieure à celle régnant dans la première partie, puis à mettre brutalement en contact les deux parties pour obtenir, du fait de la différence des pressions, une détente brutale du gaz moteur qui se détend par une onde de détente et s'écoule dans le gaz de travail, en créant une onde de choc de compression qui permet d'augmenter considérablement la pression totale de la chambre d'expansion peu avant sa détente dans la chambre de détente et d'échappement pour produire un travail moteur.

2. Procédé de fonctionnement de chambre d'expansion selon la revendication 1 **caractérisé en ce que** la forme de la chambre d'expansion est adaptée à une création de vortex qui amplifient les effets de l'onde de choc de compression.

3. Procédé de fonctionnement de chambre d'expansion selon l'une quelconque des revendications 1 et 2 **caractérisé par** une ionisation du gaz moteur qui crée des ondes électromagnétiques pour augmenter l'intensité de l'onde de choc et pour retarder l'apparition des phénomènes de relaxation.

4. Moteur à injection d'un gaz comprimé additionnel non-polluant, pour la mise en oeuvre du procédé de la revendication 1, constitué d'une chambre d'aspiration et de compression (1), d'une chambre de détente et d'échappement (4), et d'une chambre d'expansion (2) séparées, dans lequel on introduit dans la chambre d'expansion (2) une petite quantité de gaz comprimé additionnel non-polluant provenant d'un réservoir externe (23) dans lequel est stocké le gaz sous très haute pression, **caractérisé en ce que** la chambre d'expansion (2) est divisée en deux parties (2A, 2B) séparées par un obturateur très rapide (2C) qui les met brutalement en communication au moment choisi dans le cycle, l'une de ces parties, dite « chambre moteur » (2A), est reliée à la chambre d'aspiration et de compression (1) et reçoit le gaz moteur haute pression provenant de cette dernière, la deuxième partie, dite « chambre de travail » (2B), est reliée à la chambre de détente et d'échappement (4) et reçoit le gaz comprimé additionnel non-polluant, une onde de choc de compression se développant lors de l'ouverture brutale de l'obturateur inter-chambre (2C), et ce du fait de la différence des pressions, provoquant une augmentation de pression importante peu avant la mise en communication avec la chambre de détente et d'échappement (4) pour produire le travail moteur.

5. Moteur à injection d'un gaz comprimé additionnel non-polluant selon la revendication 4 **caractérisé en ce que** les deux parties (2A, 2B) de la chambre d'expansion (2) sont réalisées en forme de tuyère où la chambre moteur (2A) débouche par un convergent dans un col (2E) fermé par l'obturateur très rapide (2G) qui permet son ouverture brutale au moment choisi dans le cycle, sur la chambre de travail (2B) par un divergent de telle sorte que le jet supersonique créé à l'ouverture du col provoque la formation de vortex qui, outre les effets de l'onde choc, permettent de produire les effets d'augmentation de pression recherchés.

6. Moteur à injection d'un gaz comprimé additionnel non-polluant selon l'une quelconque des revendications 4 ou 5 **caractérisé en ce que** la chambre moteur (2A) comporte une cathode (2H) qui permet d'ioniser le gaz moteur avant son introduction dans la chambre de travail (2B) ce qui a pour effet de créer des ondes de caractère électromagnétique, d'augmenter l'intensité de l'onde de choc dans la chambre de travail (2B), et de retarder les phénomènes de relaxation.

## Patentansprüche

1. Verfahren zum Betrieb eines Motors, der eine Expansionskammer, einen Saug- und Verdichtungsraum (1) und eine Entspannungs- und Auslaßkammer (4), die unabhängig sind, enthält, mit Einspritzung eines zusätzlichen, umweltfreundlichen Druckgases in die Expansionskammer (2), in der ein Druckerhöhungsvorgang erfolgt, **dadurch gekennzeichnet, daß** es folgendes umfaßt: Teilung des Druckerhöhungsvorgangs in der Expansionskammer in zwei Schritte, indem einerseits ein Antriebsgas unter hohem Druck aus dem Saug- und Verdichtungsraum in einen Teil der Expansionskammer eingeleitet wird und andererseits das zusätzliche, umweltfreundliche Druckgas, das sogenannte "Arbeitsgas", in den anderen Teil der Expansionskammer unter einem deutlich niedrigeren Druck als dem im ersten Teil herrschenden eingeleitet wird, dann die beiden Teile plötzlich in Kontakt gebracht werden, um aufgrund der Differenzdrücke eine plötzliche Entspannung des Antriebsgases zu erreichen, das sich durch eine Druckwelle entspannt und in das Arbeitsgas strömt, wodurch eine Druckstoßwelle entsteht, die eine beträchtliche Erhöhung des Gesamtdrucks der Expansionskammer kurz vor seiner Entspannung in die Entspannungs- und Auslaßkammer gestattet, um eine Antriebsarbeit zu erzeugen.

2. Verfahren zum Betrieb einer Expansionskammer nach Anspruch 1, **dadurch gekennzeichnet, daß** die Form der Expansionskammer zur Erzeugung von Wirbeln ausgeführt ist, die die Wirkungen der Druckstoßwelle verstärken.

3. Verfahren zum Betrieb einer Expansionskammer nach Anspruch 1 oder 2, **gekennzeichnet durch** eine Ionisation des Antriebsgases, die elektromagnetische Wellen erzeugt, um die Stärke der Stoßwelle zu vergrößern und das Auftreten der Entspannungsphänomene zu verzögern.

4. Motor mit Einspritzung eines zusätzlichen, umweltfreundlichen Druckgases zur Durchführung des Verfahrens nach Anspruch 1, der aus folgendem besteht: einem Saug- und Verdichtungsraum (1), einer Entspannungs- und Auslaßkammer (4) und einer Expansionskammer (2), die voneinander getrennt sind, wobei man in die Expansionskammer (2) eine geringe Menge an zusätzlichem, umweltfreundlichem Druckgas aus einem externen Speicher (23), in dem das unter sehr hohem Druck stehende Gas gespeichert ist, einleitet, **dadurch gekennzeichnet, daß** die Expansionskammer (2) in zwei durch einen sehr schnellen Verschluß (2C) getrennte Teile (2A, 2B) unterteilt ist, der sie zu dem gewählten Zeitpunkt im Zyklus plötzlich miteinander verbindet, wobei einer dieser Teile, die sogenannte "Antriebskammer" (2A), mit dem Saug- und Verdichtungsraum (1) verbunden ist und das unter hohem Druck stehende Antriebsgas aus diesem enthält, und der zweite Teil, die sogenannte "Arbeitskammer" (2B), mit der Entspannungs- und Auslaßkammer (4) verbunden ist und das zusätzliche, umweltfreundliche Druckgas erhält, wobei beim plötzlichen Öffnen des zwischen den Kammern befindlichen Verschlusses (2C) aufgrund der Differenzdrücke eine Druckstoßwelle erzeugt wird, die kurz vor der Herstellung der Verbindung mit der Entspannungs- und Auslaßkammer (4) eine große Druckerhöhung verursacht, um die Antriebsarbeit zu erzeugen.

5. Motor mit Einspritzung eines zusätzlichen, umweltfreundlichen Druckgases nach Anspruch 4, **dadurch gekennzeichnet, daß** die beiden Teile (2A, 2B) der Expansionskammer (2) in Form einer Düse ausgeführt sind, wobei die Antriebskammer (2A) durch einen konvergierenden Teil in einen Hals (2E) mündet, der durch den sehr schnellen Verschluß (2G) geschlossen ist, welcher zu dem gewählten Zeitpunkt im Zyklus sein plötzliches Öffnen zur Arbeitskammer (2B) durch einen divergierenden Teil gestattet, so daß der beim öffnen des Halses erzeugte Überschallstrahl die Bildung von Wirbeln bewirkt, die außer den Stoßwellenwirkungen die Erzeugung der angestrebten Druckverstärkungswirkungen gestatten.

6. Motor mit Einspritzung eines zusätzlichen, umweltfreundlichen Druckgases nach Anspruch 4 oder 5, **dadurch gekennzeichnet, daß** die Antriebskammer (2A) eine Kathode (2H) enthält, die die Ionisierung des Antriebsgases vor seiner Einleitung in die Arbeitskammer (2B) gestattet, wodurch elektromagnetische Wellen erzeugt werden, die Stärke der Stoßwelle in der Arbeitskammer (2B) vergrößert wird and die Entspannungsphänomene verzögert werden.

## Claims

1. Method of operation of an engine comprising an expansion chamber, an induction and compression chamber (1) and an expansion and exhaust chamber (4) which are independent, with the injection of an additional compressed non-polluting gas into the expansion chamber (2) in which a process of pressure increase occurs, **characterized in that** it consists in splitting the process of increasing the pressure in the expansion chamber into two stages, by introducing, on the one hand, a high-pressure driving gas from the induction and compression chamber into part of the expansion chamber and by introducing, on the other hand, the additional compressed non-polluting so-called "working gas" into the other part of the expansion chamber at a pressure markedly lower than the pressure obtaining in the first part, then in suddenly bringing the two parts into contact to obtain, because of the pressure difference, a sudden expansion of the driving gas which expands in the form of an expansion wave and flows into the working gas, thereby creating a compression shock wave which makes it possible to considerably increase the total pressure in the expansion chamber shortly before it expands in the expansion and exhaust chamber to produce work.

2. Method of operation of an expansion chamber according to Claim 1, **characterized in that** the shape of the expansion chamber is tailored to the creation of vortexes which amplify the effects of the compression shock wave.

3. Method of operation of an expansion chamber according to either one of Claims 1 and 2, **characterized by** ionization of the driving gas, which ionization creates electromagnetic waves to increase the intensity of the shock wave and delay the onset of relaxation phenomena.

4. Engine with the injection of an additional compressed non-polluting gas for implementing the method of Claim 1, consisting of an induction and compression chamber (1), of an expansion and exhaust chamber (4) and of an expansion chamber (2) which are separate, in which engine a small amount of additional compressed non-polluting gas from an external tank (23) in which the gas is stored under very high pressure is introduced into the expansion chamber (2), **characterized in that** the expansion chamber (2) is divided into two parts (2A, 2B) separated by a very high-speed shutter (2C) which brings them suddenly into communication at the chosen moment in the cycle, one of these parts, known as the "driving chamber" (2A), is connected to the induction and compression chamber (1) and receives the high-pressure driving gas therefrom, the second part, the so-called "working chamber" (2B), is connected to the expansion and exhaust chamber (4) and receives the additional compressed non-polluting gas, a compression shock wave developing when the inter-chamber shutter (2C) is suddenly opened as a result of the pressure difference, causing a significant increase in pressure shortly before communication with the expansion and exhaust chamber (4), to produce work.

5. Engine with the injection of an additional compressed non-polluting gas according to Claim 4, **characterized in that** the two parts (2A, 2B) of the expansion chamber (2) are in the form of nozzles where the driving chamber (2A) opens via a convergent section into a throat (2E) closed by the very high-speed shutter (2G) which allows it to be opened suddenly at the chosen moment in the cycle, and onto the working chamber (2B) via a divergent section such that the supersonic jet created when the throat is opened causes the formation of vortexes which, aside from the shock wave effects, make it possible to produce the desired pressure-increasing effects.

6. Engine with the injection of an additional compressed non-polluting gas according to either one of Claims 4 and 5, **characterized in that** the driving chamber (2A) comprises a cathode (2H) which allows the driving gas to be ionized before it is introduced into the working chamber (2B), this having the effect of creating waves of electromagnetic nature, of increasing the intensity of the shock wave in the working chamber (2B), and of delaying the relaxation phenomena.
